(19) **Europäisches Patentamt**

**European Patent Office**

**Office européen des brevets**

(11) **EP 0 901 292 B1**

(12) **EUROPEAN PATENT SPECIFICATION**

(45) Date of publication and mention
of the grant of the patent:
**12.12.2001 Bulletin 2001/50**

(51) Int Cl.⁷: **H04N 9/79**

(21) Application number: **98121756.5**

(22) Date of filing: **28.03.1995**

(54) **Video processing circuit**

Videoverarbeitungsschaltung

Circuit de traitement vidéo

(84) Designated Contracting States:
**FR**

(30) Priority: **28.03.1994 JP 5781994**
**28.07.1994 JP 17648894**

(43) Date of publication of application:
**10.03.1999 Bulletin 1999/10**

(62) Document number(s) of the earlier application(s) in
accordance with Art. 76 EPC:
**95302048.4 / 0 680 228**

(73) Proprietors:
• **KABUSHIKI KAISHA TOSHIBA**
**Kawasaki-shi, Kanagawa-ken 210-8572 (JP)**
• **TOSHIBA AVE CO., LTD**
**Minato-ku, Tokyo (JP)**

(72) Inventors:
• **Murayama, Akihiro,**
**Intellectual Property Division**
**Minato-ku, Tokyo (JP)**
• **Morita, Makoto, Intellectual Property Division**
**Minato-ku, Tokyo (JP)**

(74) Representative: **Litchfield, Laura Marie et al**
**Haseltine Lake & Co.**
**Imperial House**
**15-19 Kingsway**
**London WC2B 6UD (GB)**

(56) References cited:
**FR-A- 2 618 032** **GB-A- 2 132 810**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention generally relates to a video signal processing circuit which operates a color processing in a video signal recording reproducing apparatus.

The present invention relates in particular to a chroma recording signal processing circuit which is suitable in using a L-SECAM system VCR (VTR).

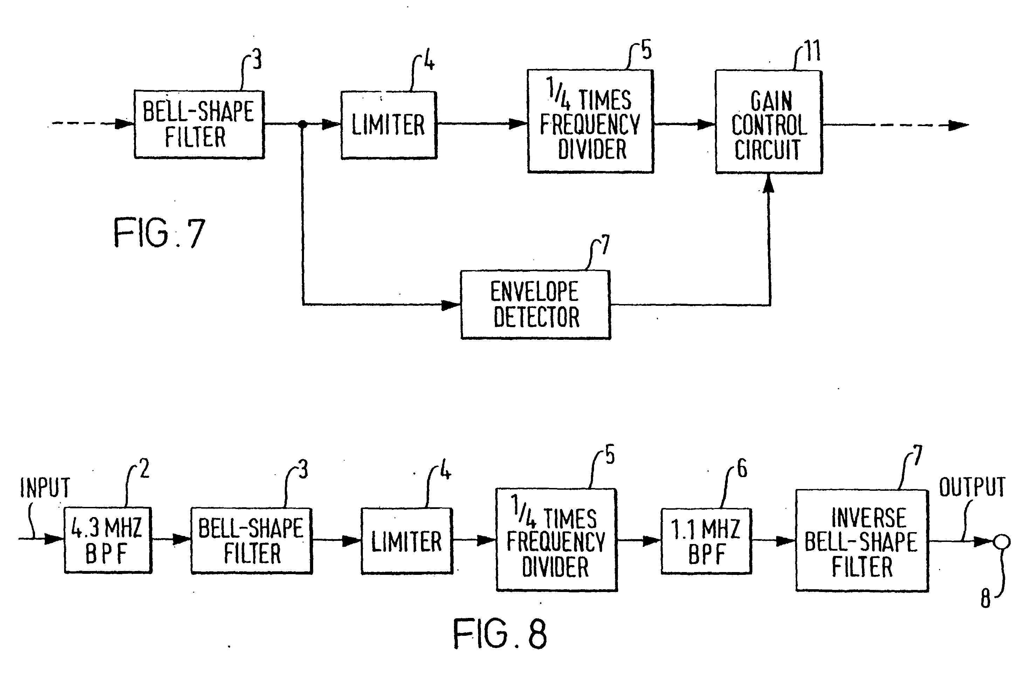

A conventional L-SECAM system VCR recording signal processing circuit is shown in FIGURE 8. In the drawing 1 denotes an input terminal. A SECAM baseband signal input to the input terminal 1 is applied to a band-pass filter 2 having 4.3 MHz center frequency (fo). wherein only a SECAM chroma signal is extracted. The output of the band pass filter 2 is input to a bell-shape filter 3 with the 0.286 MHz center frequency f0 and cancels an amplitude and a delay characteristics of an inverse bell-shape filter added on the transmission side. The group delay characteristic and the amplitude characteristic of the chroma signal are flattened after passing through the filter. The output of the bell-shape filter 3 inputs to a limiter 4 and removes a small mixed noise. The output of the limiter 4 inputs to a factor of 4 frequency divider 5 and divide the frequency to 1/4 times. The factor of 4 frequency division by the factor of 4 frequency divider 5 is specific to the L-SECAM system. performs a down conversion of the chroma signal from near 4 MHz to 1 MHz. The output of the factor of 4 frequency divider 5 suppresses a carrier energy via the band pass filter 6 with 1.1 MHz and the inverse bell-shape filter 7 with the center frequency fo of the 1.0715 MHz and outputs the energy to an output terminal 8 as a recording chroma signal.

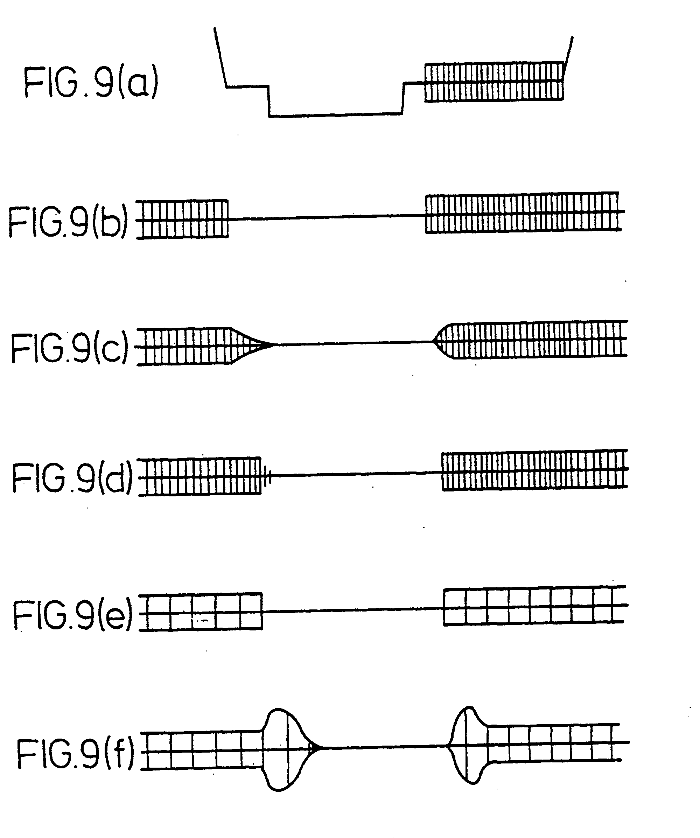

Signal waveforms in each signal stage as shown in FIGURE 8 is explained using FIGURE 9. The descriptions of the group delays of the filters will be omitted for the simplify of explanation. If a chroma signal (b) which is extracted from the composite signal (a) shown in the enlarged view of the horizontal retrace period by a band pass filter 2 passes through a bell-shape filter 3, the signal waveform in this case leaves its trace at the chromes ending point and rises gradually at the leading edge of chroma signal (IDENT) as like the waveform (c). It is because the Q of the bell-shape filter is as high as 16. When a signal (d) which is amplified by the limiter 4 is divided by the factor of 4 by the factor of 4 divider 5, it becomes a signal (e). Finally the output signal of the inverse bell-shape filter 6 greatly expands at the chroma starting instant and the ending instant, as like the waveform (f). It is because Q (Q in numerator of transfer function) of the inverse bell-shape filter is also as high as 16.

When such a signal is recorded together with a Y (luminance) signal which is processed an FM modulation, some recording level leads to an over modulation and leads to signal state which becomes impossible to reproduce the signal rightly since the Y signal starts a phase inversion. To avoid these states, the ways that the swollen parts of the output waveform (f) of the inverse bell-shape filter 6 are non-linearly suppressed, or the Q of the inverse bell-shape filter 6 is lowered, have been employed.

However, when performing the non-linear suppression the high frequency energy at the swollen parts increases, and it arises a tracing noise or a color impairment such as red tinge on the leftside of the picture at the reproducing operation. When lowering the Q of the inverse bell-shape filter 6, it tends to fall outside the standard and to deteriorate a transient performance of color since the group delay of the chroma signal does not match with other apparatus as reproducing.

As described above, the conventional SECAM system recording circuit has a drawback that it can not reduce the large amplitude portion at the chroma starting instant and ending instant without deteriorations of any other performance.

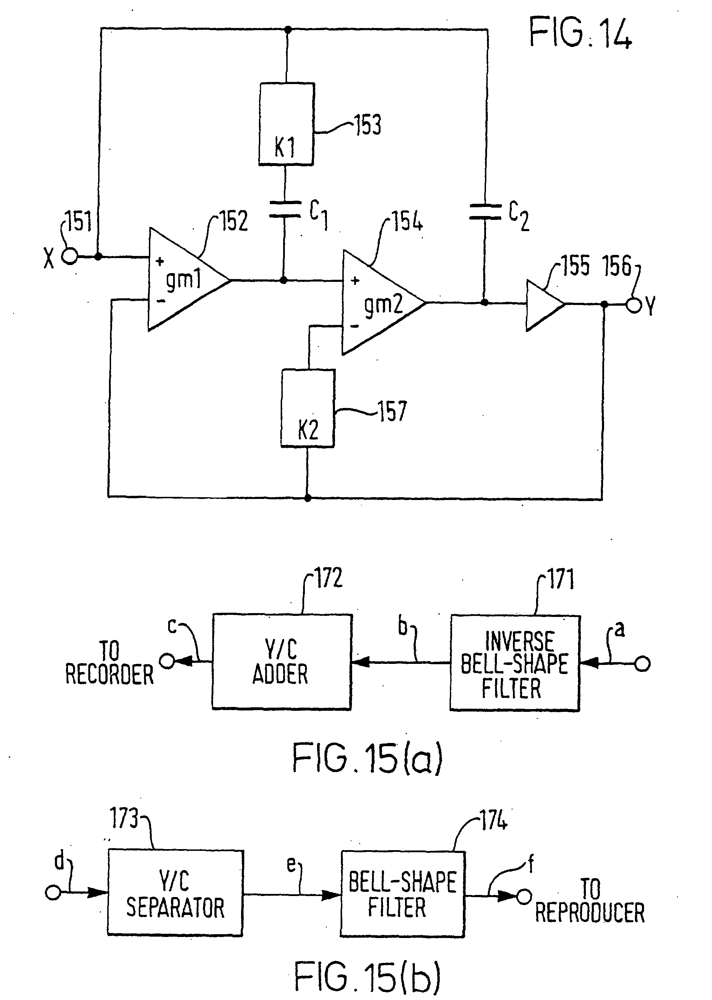

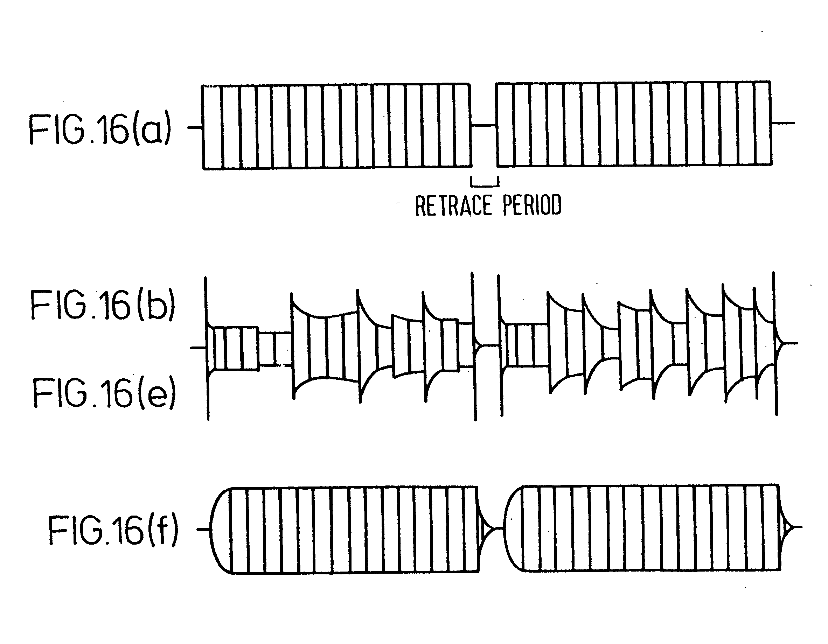

Another conventional system of the recording reproducing apparatus of the SECAM signal is shown in FIGURE, 15. In the drawing, 1 denotes an inverse bell-shape filter for recording, 172 denotes a Y/C adder for recording, 173 denotes a Y/C separator for reproducing, and 174 denotes a bell-shape filter for reproducing. Further, waveforms of the signals a, b, e and f in FIGURE 15 are illustrated as (a), (b), (e) and (f) in FIGURE 16.

In recording time, an inverse bell-shape filter 171 is applied a SECAM color signal (a) which is down-converted the frequency by a factor of four (1/4) through a frequency down-converter (not shown in FIGURE 15). The inverse bell-shape filter 171 provides an inverse bell-shape characteristics as shown in FIGURE 16(b). The signal is then added with a luminance signal in a Y/C adder 172. The output signal c of the Y/C adder 172 is shown in FIGURE 16 (c). The signal c is then recorded on a recording medium (not shown in FIGURE 15).

In a reproducing operation, a SECAM composite signal d reproduced from the recording medium (not shown in FIGURE 15) is input to a Y/C separator 173. The SECAM composite signal d is removed a luminance signal component therefrom in the Y/C separator 173, thus obtained a SECAM color signal e (see FIGURE 16(e)). The SECAM color signal e is then flattened its amplitude envelope and group delay characteristics which are provided in the inverse bell-shape filter 171 in recording operation in the bell-shape filter 174, as shown in FIGURE 16(f).

Here, the output waveform b of the inverse bell-shape filter 171 as shown in FIGURE 16(b) according to a signal respond in the inverse bell-shape filter. Between the two, a front porch side signal is output a energy which is stored inside of the inverse bell-shape filter 171, it causes a jitter deterioration when it is piled up the horizontal synchronizing signal by the Y/C adder 172. Accordingly, it is desirable to suppress or remove the front porch side signal.

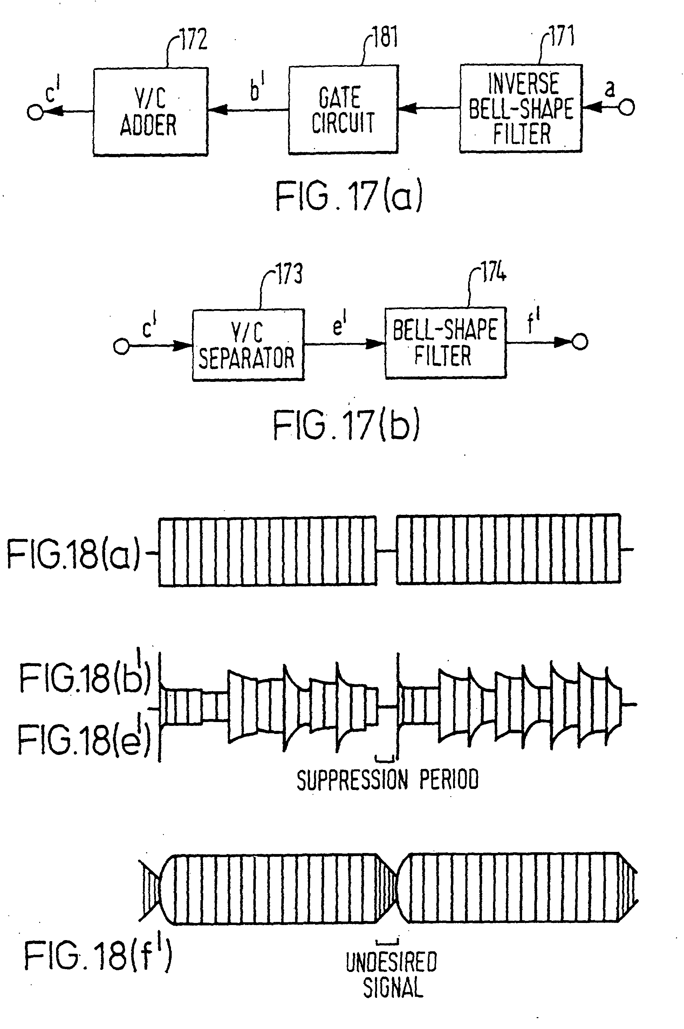

However, to suppress or remove the front porch side signal in recording operation causes a pictue quality deterioration in the bell-shape filter 174 in the reproducing operation. It is explained by using FIGURE 17 and FIGURE 18.

In FIGURE 17, only the gate circuit 181 for removing the front porch side signal is defined between the inverse bell-shape filter 171 for recording and the Y/C adder 172 for recording in FIGURE 15. Other constituent parts in FIGURE 17 are the same as in FIGURE 15. The signal waveforms a, b', e', f' in FIGURE 17 are shown in FIGURE 18 as (a), (b'), (e'), (f').

In recording operation, a SECAM color signal a is given an inverse bell-shape characteristics in the inverse bell-shape filter 171. Then in a gate circuit 181 the SECAM color signal a is removed signals on the front porch side, thus obtained the signal b'. The signal b' is added with a luminance signal in the Y/C adder 172 so as to output the signal c', which is then recorded on a recording medium (not shown).

In reproducing operation, a luminance signal component is removed from the SECAM composite signal c' which is reproduced from the recording medium (not shown in FIGURE 18) in the Y/C separator 173, thus the signal e' is obtained. Then the amplitude envelope and the group delay characteristics which are given in the inverse bell-shape filter 171 in recording operation are flattened in the bell-shape filter 174.

However, the energy stored inside of the bell-shape filter 174 is output in the removed parts, and it becomes a undesired signal. Although the undesired signal becomes short since the lower the Q of the bell-shape filter is the more losses it suffers the undesired signal inside of the bell shaped filter 174. Since typical bell-shape filters in the SECAM signal recording reproducing apparatus have a high Q, the bell-shape filter 174 leaves it's trace as f' and it appears as a noise on the left side of the screen display actual picture as being overlapped with the next line color signal.

The way to prevent this phenomenon in the conventional SECAM signal recording reproducing apparatus is to lower the Q of the bell-shape filter 174 to shorten the undesired signal. However, if the Q of the bell-shape filter is lowered it will be hard to flatten the amplitude envelope and the group delay characteristics, since it can not match with the recording inverse bell-shape filter 171.

As described above, the conventional SECAM system video signal processing circuit has a drawback that since the undesired signal which is produced by the signal response of the bell-shape filter in the reproducing apparatus causes the noise on the left side of the picture when the gating is applied in the horizontal retrace interval in recording operation for such as a jitter improvement, it has to reduce the undesired signal as the Q of the bell-shape filter of the reproducing apparatus is lowered evenly and the color transient is also lowered.

An object of the present invention is to provide a SECAM system video signal processing circuit which can shorten the undesired signal causing the noise without lowering the Q of the filter within the color signal interval.

A video signal processing circuit according to the present invention is defined in appended claims 1 and 4. A VCR including a signal processing circuit as claimed in claims 1 to 4 is defined in appended claim 5.

According to the arrangement or the invention described above, when the means mentioned above is used for the SECAM signal recording reproducing apparatus and the Q of the bell-shape filter is lowered by the timing signal only within the vertical and horizontal retrace interval in the color signal processing of the SECAM recording signal recorded by suppressing or removing the color signal within the vertical and horizontal retrace interval, it has a high Q in the color signal period and flattens the amplitude envelope and the group delay characteristics which are obtained by the inverse bell-shape filter in the recording operation. The undesired signal is shortened since it has a low Q in the vertical and horizontal retrace intervals.

Additional objects and advantages of the present invention will be apparent to persons skilled in the art from a study of the following description and the accompanying drawings, which are hereby incorporated in and constitute a part of this specification.

For a better understanding of the present invention and many of the attendant advantages thereof, reference will now be made by way of example to the accompanying drawings, wherein:

FIGURE 1 is a system diagram for explaining a SECAM system recording circuit
FIGURE 2 is a signal waveform diagram for explaining the operation of the circuit of FIGURE 1;
FIGURE 3 is a signal waveform diagram for explaining the processing the chroma signal in FIGURE 1;
FIGURE 4 is a circuit diagram for explaining the embodiment of the gain control circuit of FIGURE 1;
FIGURE 5 is a system diagram for explaining another embodiment of the timing signal generating circuit of FIGURE 1;
FIGURE 6 is a signal waveform diagram for explaining a modification shown in FIGURE 5;
FIGURE 7 is a system diagram for explaining the modification of FIGURE 1;
FIGURE 8 is a system diagram for explaining an example of conventional processing circuit;
FIGURE 9 is a signal waveform diagram for explaining the operation of the circuit of FIGURE 8;
FIGURE 10 is a diagram showing a circuit arrangement for explaining an embodiment of the video signal processing circuit according to the present invention;

FIGURE 11 is a signal waveform diagram for explaining the operation of the circuit of FIGURE 10;
FIGURE 12 is a diagram showing a circuit arrangement for explaining still another embodiment of the video signal processing circuit according to the present invention;
FIGURE 13 is a signal waveform diagram for explaining the operation of the circuit of FIGURE 12;
FIGURE 14 is a diagram showing a circuit arrangement for explaining the detailed circuit arrangement usable for the bell-shape filter and the inverse bell-shape filter of the embodiments of the present invention;
FIGURE 15 is a diagram showing a circuit arrangement of a conventional recording reproducing processing circuit of SECAM signals;
FIGURE 16 is a signal waveform diagram for explaining the operation of the the circuit of FIGURE 15;
FIGURE 17 is a diagram showing a circuit arrangement of another conventional recording reproducing processing circuit for SECAM signals, including a gate circuit; and
FIGURE 18 is a signal waveform diagram for explaining the operation of the circuit of FIGURE 17.

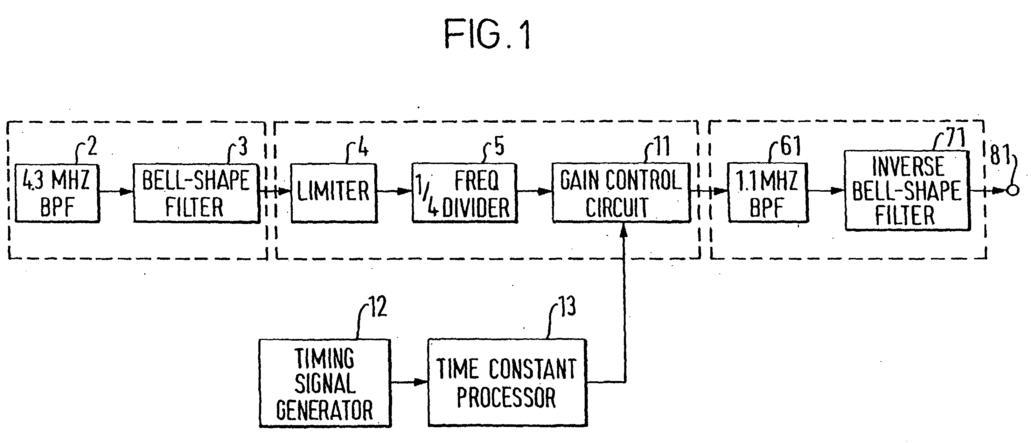

A SECAM system recording circuit will be explained hereinafter in reference to the drawings. FIGURE 1 is a system diagram for explaining a SECAM system recording circuit. The composite video signal is input to the input terminal 1 and only the chroma signal component is extracted by the 4.3 MHz band pass filter.2. The chroma signal is input to the bell-shape filter 3 and the group delay and the amplitude of the inverse bell-shape filter passed through at the transmission side is be flat by canceling it's group·amp litude envelope. The output signal of the bell-shape filter 3 is amplitude by the limiter 4, then it is input to the factor of 4 frequency divider 5 to divide the frequency by the factor of 4, and the down conversion signal of the L-SECAM is obtained. The frequency division signal is input to a gain control circuit 11. The gain control signal of the gain control circuit 11 is produced by a timing generating circuit 12 and a time constant processing circuit 13. A gain controlled signal is passed through the 1.1 MHz band pass filter 61 so that the gain controlled signal is removed undesired high frequency components or noise components therefrom. The output of the band pass filter 61 is input to the inverse bell-shape filter so as to be suppressed the energy of the carrier signal. The output of the inverse bell-shape filter 71 is output to the output terminal 81 as the L-SECAM chroma recording signal.

The operation of the inverse bell-shape filter 71 will be explained some more. The inverse bell-shape filter 71 is a type of trap system filter designed for suppressing signals by 20dB at their center frequency. That is, when a signal is continuously input it's inverting signal is produced as much energy as the input signal at the filter so as that the input signal is cancelled by the inverting signal. When in the condition the input has abruptly decreased, the inverting signal presents at a large amplitude without being cancelled. It is because that the energy previously stored in the filter still remains just after the instant that the input has been removed. If on the other hand the input signal abruptly increases in a condition that no energy is stored in the filter, the input signal present as its so large amplitude. It is also because that any energy capable of cancelling the large amplitude input is not yet stored. By noting the decreasing and increasing of energy in filters, this embodiment is directed to flatten the output amplitude by providing the inverse bell-shape filter 71 with a signal corresponding to the decreasing and increasing of energy at the inverse bell-shape filter 71.

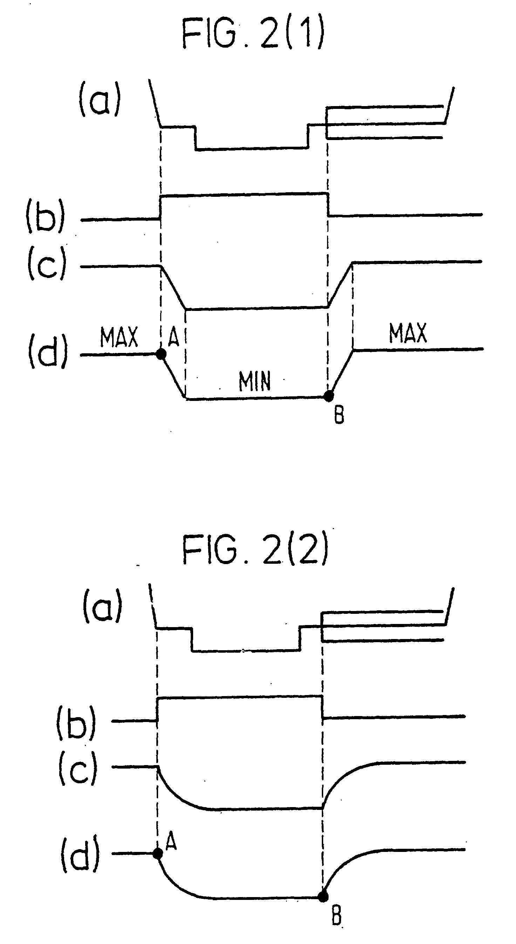

Referring now to FIGURE 2, the gain control signal will be explained. In brief descriptions, a timing pulse (b) indicating non chroma intervals in the retrace interval of the composite video signal (a), as shown in FIGURE 2(1), is generated from the timing generating circuit 12. Based on the timing signals (b) a pulse (c) with a prescribed RAMP function is produced in the time constant processing circuit 13. The pulse (c) is supplied to the gain control circuit 11. The gain control circuit 11 controls to increase the gain of signals in response to the high level Hi of the pulse (c) while decrease the gain in response to the low level Lo of the pulse (c). When it is designed to generate pulses such as the pulse (c) using an IC the RAMP function will be realized by charging and discharging operations of capacitors for constant currents applied thereto. Further, the time constant processing circuit 13 can be designed to make the pulse (c) have a prescribed exponential function based on the timing pulse (b), as shown in FIGURE 2(2), in the time constant processing circuit 13. The exponential function is realized by supplying the timing signal into a combination of resistor and capacitor. In cases of the above two examples. though there can be employed several ways to suppress undesired dispersions of the time constant descriptions thereof are omitted herein.

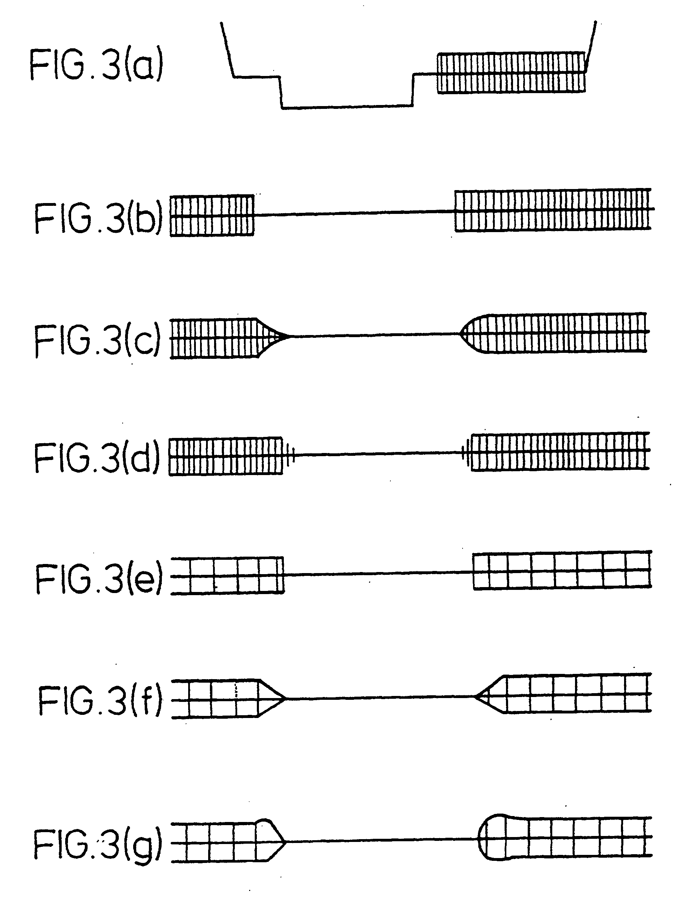

Referring now to FIGURE 3, the state that the gain is controlled based on the pulse (c) as shown in FIGURE 2 will be explained. A chroma signal as shown in FIGURE 3(b) is extracted from a composite video signal as shown in FIGURE 3(a) by the 4.3 MHz BPF 2. When the chroma signal (b) is applied to the bell-shape filter 3, the output of the filter 3 leaves it's trace at the ending point and after that it gradually increases at the starting point, as shown in FIGURE 3(c). The signal (c) is amplified by a limiter 4, so that a signal as shown in FIGURE 3(d) is obtained. The signal (d) is then divided by the factor of 4 in a factor of 4 divider 5, so that a rectangular waveform signal as shown in FIGURE 3(e) is obtained. The signal (e) thus has an envelope different from that of the signal (c) output from the bell-shape filter 3. After that the signal (e) is processed with the RAMP function in the gain control circuit 11, so that a signal as shown in FIGURE 3(f) is obtained. The signal (f) is then applied to an inverse bell-shape filter 71, so that an output as shown in FIGURE 3(g) is obtained. The signal (g) has a relatively uniform envelope as shown in FIGURE 3.

In the above embodiment, since the amplitude of the signal (g) gradually changes at the chroma ending instant at that the energy has been stored in the inverse bell-shape filter 71 and the chroma starting instant at that the energy is beginning to be stored in the filter 71, such an undesired state of abrupt changes of amplitude caused by filter operation is effective depressed.

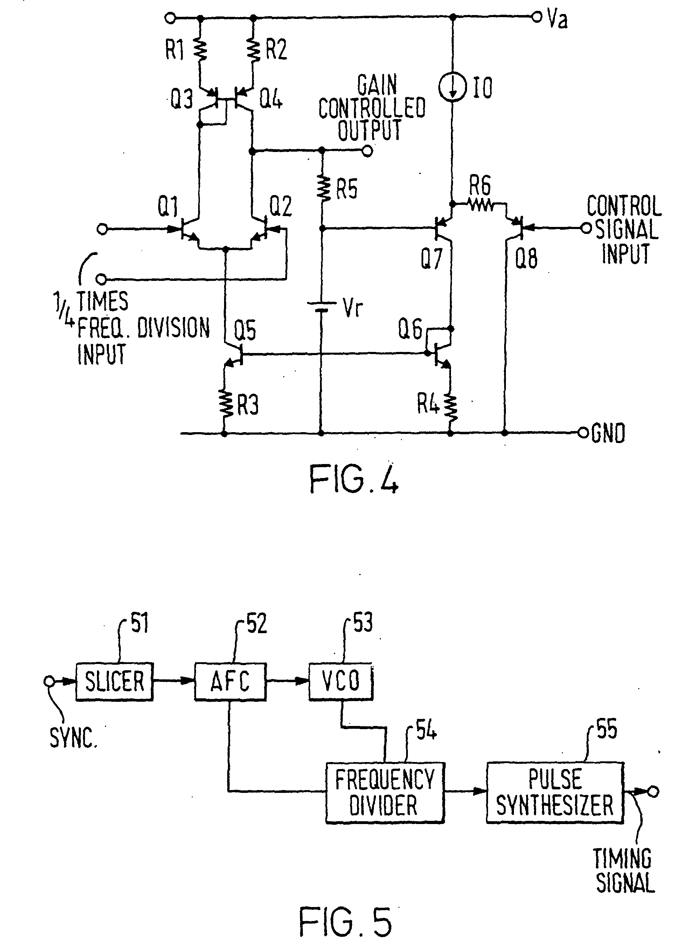

Referring now to FIGURE 4, the details of the gain control circuit 11 will be described. It is assumed that the factor of 4 frequency divider 5 in front of the circuit 11 has a differential output. The frequency division signal obtained by the factor of 4 frequency divider 5 is converted into a current signal by a differential amplifier comprised of transistors Q1 and Q2. The current signal is single-ended in a PNP current mirror circuit comprised of transistors Q3 and Q4, and then flows into a load circuit comprised of a constant voltage supply Vr and a resistor R5. A voltage signal generated in the resistor R5 is output to the 1.1 MHz band pass filter 61 following the circuit 11. A bias current in the differential amplifier is supplied by the control circuit which is composed by transistors Q5 to Q8. An amplifier comprised of the transistor Q7 having its emitter coupled directly to a constant current source Io and the transistor Q8 having its emitter coupled to the constant current source Io via a resistor R6. The collector of the transistor Q7 is coupled to a current mirror circuit comprised of NPN transistors Q5 and Q6, while the collector of the transistor Q5 is coupled to a common emitter node of transistors Q1 and Q2. The base of the transistor Q8 is provided for receiving the control signal as shown in FIGURE 2(c). If the base potentials of the transistors Q7 and Q8 balance with each other during the control signal (c) is in the high level Hi, the circuit gain becomes MAX so as to amplify the chroma signal since the current Io flows from the prescribed current supply to the transistors Q1 and Q2 with little current flow in the transistor Q8 due to a current suppression by the resistor R6. During the transistor Q8 is kept turned-ON while the transistor Q7 is kept turned-OFF, the signal (c) is in the low level state so as that the circuit gain becomes MIN. When the signal (c) is shifted, the current flowing through the resistor R6 linearly changes, so that the circuit gain changes as shown in FIGURE 2 (d) in similar to to the change of the signal (c). Thus an output such as shown in FIGURE 3(f) will be obtained.

Referring now to FIGURE 5, the timing signal generating circuit 12 for generating the timing signal as shown in FIGURE 2 is explained. It is assumed that the VCR includes a sync separator for separating the sync signal. The input sync signal is shaped its waveform by a slice circuit 51 and then input to an AFC (automatic frequency control circuit) 52. The output of the AFC 52 is smoothed in by a filter circuit (not shown) and then input to a VCO 53 for controlling thereof. An oscillation output of the VCO 53 is fed back to the AFC 52 via a frequency divider 54. Thus the AFC 52, the VCO 53 and the frequency divider 54 constitute a PLL. The timing signal is obtained by a pulse shaping performed by using a pulse shaping circuit 55 based on frequency division signals obtained from the frequency divider 54.

It is possible to generate frequency signals having a prescribed multiple (typically, 32 times) of the frequency of the horizontal sync signal hus synchronized with the sync signal. Accordingly it is also possible to generate pulses at any frequency by synthesizing the frequency division signals. Therefore it is possible to obtain dignified control signals having equal timings even if the dignity of the horizontal sync signal will deteriorate by a weak electric field.

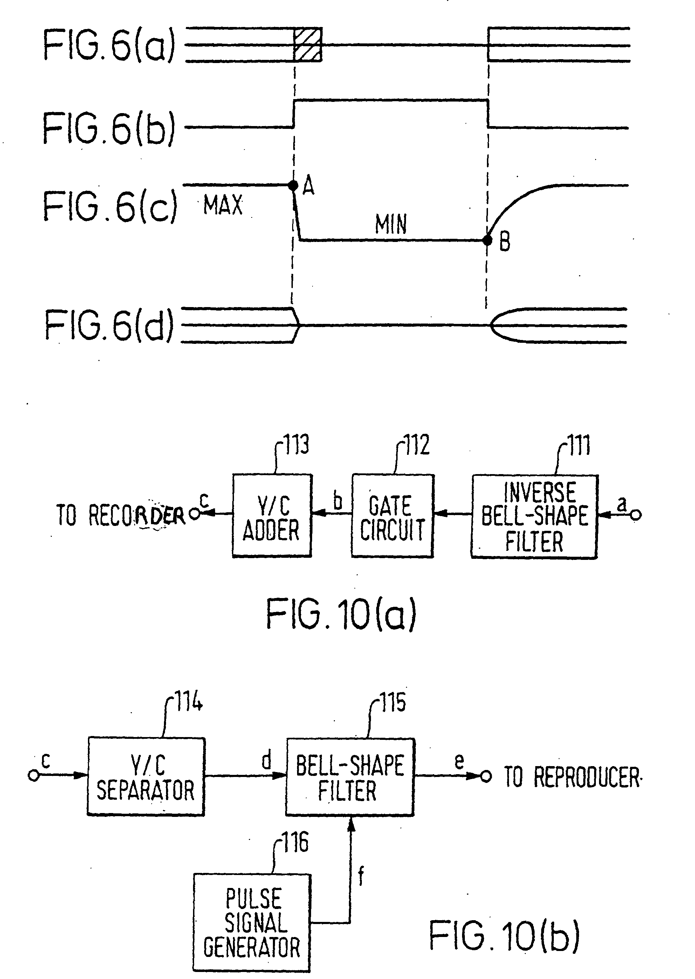

Referring now to FIGURE 6, the relation between the timing signal and the control signal will be explained. When the signal (d) from the limiter 4 which is the amplified signal of the output of the bell-shape filter 3 is divided by the factor of 4 in the factor of 4 frequency divider 5, the signal (d) leaves it's trace in the bell-shape filter 3 at the ending instant of the chroma signal. That is, the signal (d) has a delay portion as shown by the shaded area in FIGURE 3(c). The delay portion or the shaded area is an undesired portion because its amplitude envelope tends to decrease as shown in FIGURE 3(c) so that its S/N is inferior to that of the input chroma signal. It is thus desired to remove the shaded portion since the noise components is further amplified in the inverse bell-shape filter 71 apparently, and thus exhibits noises on the leftside of the display screen when this shaded portion of the signal is reproduced.

In this case, when the timing signal begins from the instant at the undesired shaded portion and lasts to the starting instant of the IDENT signal only effective chroma signal is extracted as shown in FIGURE 6(b). In this time, in the time constant processing circuit 13 the trailing edge does not have the same time constant as that in the leading edge but be shaped as shown in FIGURE 6(c). So, the controlled gain decreases abruptly at the point A, and increases gradually at the point B, thus it is used for gating off the undesired portion. The points A and B are also shown in FIGURE 2 to accord with the timings shown in FIGURES 2 and 6. That is this arrangement suppresses the amplitude at the chroma starting instant and ending instant using the RAMP function and the exponential function.

The bell-shape filter 3 of the recording processing is operated by the 4 MHz frequency, and the inverse bell-shape filter 71 is operated by the 1 MHz frequency which is the 1/4 times of the 4 MHz frequency. Accordingly, the group delay of the inverse bell-shape filter 71 is four times as much as that of the bell-shape filter 3. It is desired to use a 4.4 μsec time constant to avoid the significant increase of the amplitude. However, the time constant which is suitable for the recording and the reproducing operations without any hindrance for an ACC amplification in the reproducing operation using TV receivers may be 0.5 μ sec to 1.5 μ sec. In this time constant a good result is obtained in the recording and the reproducing operations and also the display operation on the TV receivers.

Now, if it is assumed that the time constant is best suited to the L-SECAM recording operation, it is possible to obtain the control signal in a simple way by using the envelope of the bell-shape filters even if the circuit scale is not as large as that of FIGURE 5. One example of it is shown in FIGURE 7. Since the output signal of the bell-shape filter 3 become as shown in FIGURE 3(c) as described above. the gain of the gain control circuit 11 is controlled by the envelope detecting circuit 72 which receives the output of the special bell-shape filter 3. Since the group delay of the bell-shape filter 3 is 1.1 μsec it can be lied within the limits as described above. But, since it is possible that the chroma signal will deteriorate the signal dignity in a weak electric field condition, and the envelope detecting output will be reversed in the image displaying interval, it is desirable to generate the window signal in the horizontal retrace interval from the system such as shown in FIGURE 5 and to perform the gain control operation using the envelope within the interval.

Further, the circuit as shown in FIGURE 1 is explained by the signal processing sequence that the signal advances the band pass filter 2 to the bell-shape filter 3, however, the content of the pre-filter or the post-filter as shown in FIGURE 1 is not limited to by the above embodiments. Further, though the gain control circuit 11 is employed in the above embodiments, it may be realized at any section in the recording processing block in FIGURE 1. Accordingly, the gain of the factor of 4 frequency division can be controlled. Further, the gain of the limiter circuit can be controlled (or blanked) by the pulses as shown in FIGURE 6b and the output of the factor of 4 frequency divider can be subjected to the gain control by the pulse as shown in FIGURE 2 to obtain the effect as shown in FIGURE 6. It can be also obtained the same effect even if the objects subjected for the controlling are scattered in several portions in the circuit.

Essentially, this arrangement has the exponential or the RAMP in the signal processing circuit between the bell-shape filter and the inverse bell-shape filter.

As described above, this arrangement can provide the SECAM system recording circuit which is able to avoid a great amplitude at the chroma ending instant and the starting instant after the inverse bell-shape filter and operates the recording processing by its natural characteristics without sacrificing other characteristic by using the circuit according to the present invention.

An embodiment of the present invention will be explained hereinafter in reference to the attached drawings.

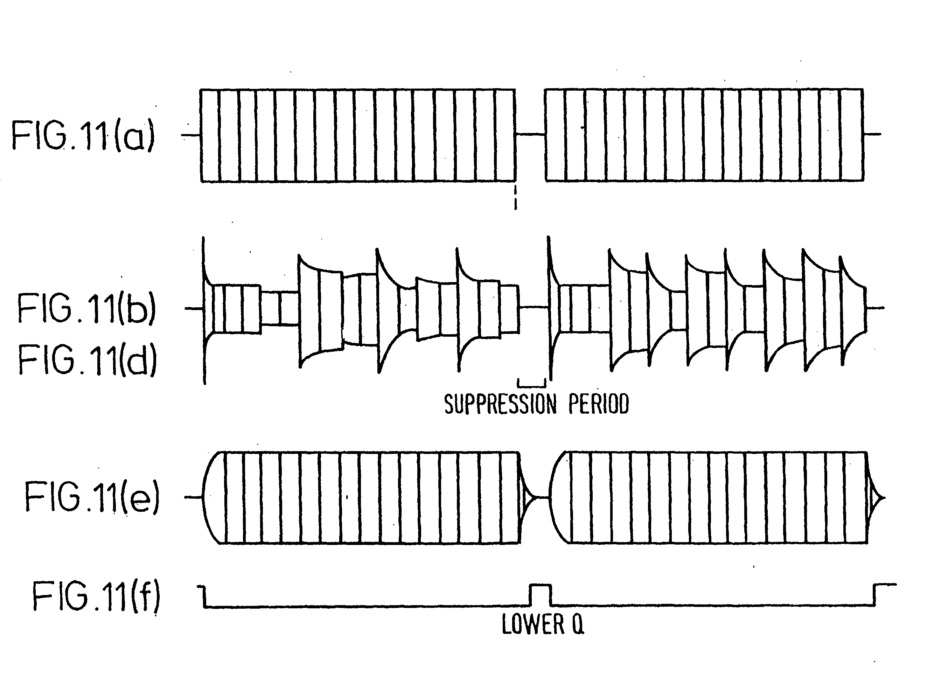

FIGURE 10 shows a circuit arrangement for illustrating an embodiment of a SECAM signal recording reproducing apparatus according to the present invention. 111 denotes the inverse bell-shape filter for recording, 112 denotes the gate circuit for removing the front porch side signal of the video signal. 113 denotes the Y/C adder, 114 denotes the Y/C separator for reproducing, 115 denotes the bell-shape filter with an adjustable Q for reproducing, and 116 denotes the pulse signal generator. Further, waveforms of signals a, b, d, e and f in FIGURE 10 are shown as (a), (b), (d), (e) and (f) in FIGURE 11.

In recording operation, the SECAM color signal a which is down converted to 1/4 times frequency by a frequency down-converter (not shown in FIGURE 10) is input. The input signal a is given an inverse bell-shape characteristics by an inverse bell-shape filter 111, thus a signal b which is removed signal components on a front porch side is output from a gate circuit 112. Further, the signal c which is added with the luminance signal is output from a Y/C adder 113. The signal c is then recorded on a recording medium (not shown).

In the reproducing operation, the SECAM composite signal c is reproduced from the recording medium and then input to a Y/C separator 114. In the Y/C separator 114 the signal c is removed the luminance signal components therefrom. Then a SECAM color signal d thus obtained is applied to a bell-shape filter 115. The bell-shape filter 115 exhibits a high Q in the color signal period so as to flatten the amplitude envelope and group delay characteristics which is obtained in the inverse bell-shape filter 111 in recording operation. Further, the Q is lowered by a timing signal f which is generated from a pulse signal generator 116 in the retrace interval, accordingly the undesired signal is shortened, as shown in FIGURE 11(e).

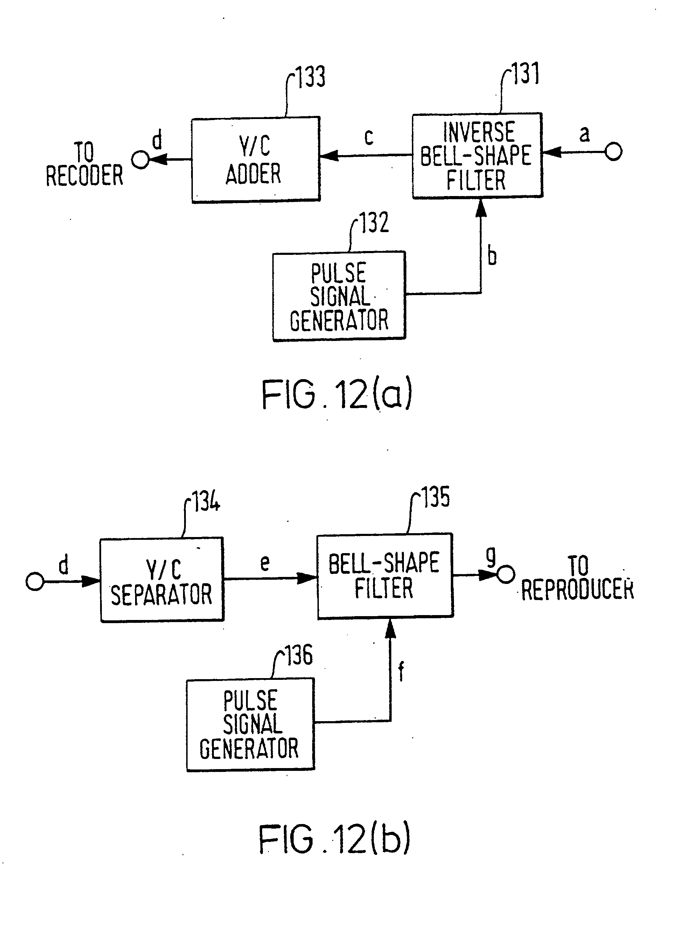

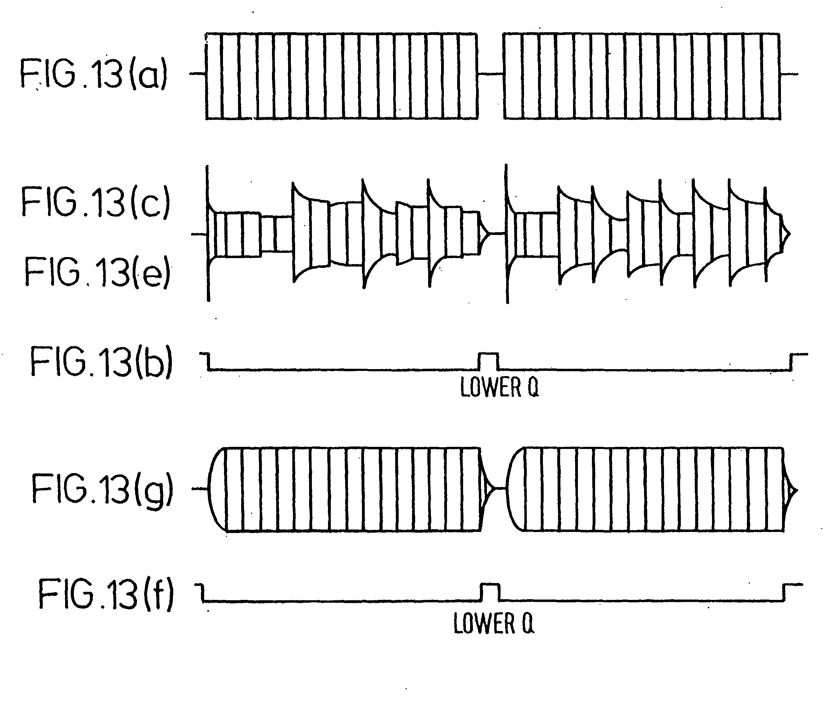

The same effect as mentioned above can be obtained without the gate circuit 112, as will be explained hereinbelow in reference to FIGURES 12 and 13. In FIGURE 12, 131 denotes an inverse bell-shape filter having a adjustable Q for the recording operation in the SECAM signal recording reproducing apparatus. 132 denotes a pulse signal generator. 133 denotes a Y/C adder for the recording operation. 134 denotes a Y/C separator for the reproducing operation. 135 denotes the bell-shape filter having the variable Q for the reproducing operation. And 36 denotes a pulse generator. Further, waveforms of signals a, b, c, f, g in FIGURE 12 are shown as (a), (b), (c), (f). (g), (h) in FIGURE 13.

In the recording operation, the SECAM color signal a which is down converted to the 1/4 times frequency by the frequency down-converter (not shown in FIGURE 12) is input. The inverse bell-shape filter 131 exhibits a high Q in the color signal interval and gives the amplitude envelope and the group delay characteristics to the signal. When the Q is lowered by the timing signal b input from the pulse signal generator 132 in the retrace interval the signals on the front porch of the video signal is compressed so as that a signal c is obtained. Then, the signal c is added with the luminance signal components in a Y/C adder 133 so as to produce an output d, which is then recorded on a recording medium (not shown in FIGURE 12).

In a reproducing operation, the recorded is reproduced from the recording medium and then applied to a Y/C separator 134. The Y/C separator 134 removes the luminance signal components from the SECAM composite signal d so as that a SECAM color signal e, which is then applied to a bell-shape filter 135 exhibiting a high Q in the color signal period. The bell-shape filter 135 flattens the amplitude envelope and the group delay characteristics which are obtained in the inverse bell-shape filter 131 in the recording operation. Further, the Q is lowered by a timing signal f which is input from a pulse signal generator 136 in the retrace intervals and thus the undesired signal becomes a short signal g, as shown in FIGURE 13 (g).

Further, the more detailed arrangement of the bell-shape filter and the inverse bell-shape filter will be explained in reference to FIGURE 14. In FIGURE 14, 151 denotes an input terminal connected to the positive input + of a gm-amplifier 152. The output of the gm-amplifier 152 is connected to the positive input + of a gm-amplifier 154, as well as to both the input terminal 151 via a capacitor C1 and an attenuator 153. The output of-the gm-amplifier 154 is connected to an output terminal 156 via a buffer amplifier 155, as well as the input terminal 151 via a capacitor C2. The output of the buffer amplifier 155 is connected to a negative input - of the gm-amplifier 152, as well as to the negative input - of the gm-amplifier 154 via an attenuator 157.

Now, the input signal to the input terminal 151 is given as. X and the output signal form the output terminal 156 is given as Y. Then a following transfer function is obtained.

$$Y/X = [S^2 + K1 \cdot gm^2/(C2 \cdot S) + gm1 \cdot gm2/(C1 \cdot C2)]/[S^2 + K2 \cdot gm2/(C2 \cdot S) + gm1 \cdot gm2/(C1 \cdot C2)] \quad (1)$$

wherein, gm1 and gm2 represent the transconductances of the gm-amplifiers 152 and 154, C1, C2 represent the capacitances of the capacitors C1 and C2, and K1, K2 represent the attenuation factors of the attenuators 153 and 157.

For instance, when the circuit of FIGURE 14 is used for the bell-shape filter, the transfer function B(s) of the bell-shape filter will be expressed as follows by giving the central frequency as ωo;

$$B(s) = [S^2 + \{\omega o/(1.6)^{1/2}\} \cdot S + \omega o^2]/[S^2 + \{\omega o/(16)^{1/2}\} \cdot S + \omega o^2] \quad (2)$$

When in the equation (1) following equation 3 is assumed

$$gm1/C1 = gm2/C2 = \omega o \quad (3)$$

so that, a following equation 4 will be obtained.

$$K1 = 1/(1.6)^{1/2}, K2 = 1/16 \quad (4)$$

From the above equations, it can be seen that the Q is able to be lowered if the attenuation factor of the attenuator 157 is lowered.

For instance, when the circuit of FIGURE 14 is used for the inverse bell-shape filter, the transfer function aB(s) of the inverse bell-shape filter will be expressed as follows by giving the central frequency as ωo:

$$a \cdot B(s) = [S^2 + \{\omega o/16\} \cdot S + \omega o^2]/[S2 + \{\omega o/(1.6)^{1/2}\} \cdot S + \omega o^2] \quad (5)$$

When in the equation (1) following equation 3 is assumed

$$gm1/C1 = gm2/C2 = \omega o \quad (6)$$

so that, a following equation 7 will be obtained.

$$K1 = 11/16, K2 = 11/(1.6)1/2 \quad (7)$$

From the above equations, it can be seen that the Q is able to be lowered if the attenuation factor of the attenuator 153 is lowered.

Accordingly, the bell-shape filter and the inverse bell-shape filter provided by properly setting the attenuation factor of the attenuators 153 and 157 depending to the recording operation mode or the reproducing operation mode. That is, the circuit of FIGURE 14 can be selectively used for the bell-shape filter and the inverse bell-shape filter instituted according to the recording mode or the reproducing mode.

Described above, there is a SECAM system recording circuit which is able to avoid a great amplitude at the chroma ending instant and the starting instant after the inverse bell-shape filter and operates the recording processing by its natural characteristics without sacrificing other characteristic.

The present invention can provide a recording/processing apparatus for SECAM signals with the high jitter tolerance and no noise on the left side of the display screen by using the video signal processing circuit according to the present invention.

As described above, the present invention can provide an extremely preferable video signal processing circuit.

## Claims

1. A video signal processing circuit, **characterized in that** it is provided with:

   recording means for recording on a recording medium a video signal comprising a color signal which is suppressed or removed within a vertical or horizontal retrace interval of a color signal recording processing system; pulse signal generator (116, 136) for generating a timing signal (f) in the vertical or horizontal retrace interval when said recorded video signal is reproduced; and
   a filter (115, 135) for filtering the reproduced color signal with a Q adjustable by the timing signal (f); wherein the Q of the filter is lowered within the vertical or horizontal retrace interval.

2. A video signal processing circuit as claimed in claim 1 **characterized in that** the video signal is a SECAM signal and the filter with the adjustable Q is a bell-shape filter.

3. A video signal processing circuit as claimed in claim 1 **characterized in that** the means for removing the color signal within the vertical or horizontal interval which is used for the color signal recording processing is comprised in a gate circuit.

4. A video signal processing circuit **characterized in that** for recording of the video signal on a recording medium it is provided with a pulse signal generator for generating a timing signal within the vertical or horizontal retrace interval of a SECAM color signal recording processing system and an inverse bell-shape filter having a Q which is adjustable by the timing signal;

   the Q of the inverse bell-shape filter is lowered only within the vertical or horizontal retrace interval; and
   for reproducing of the recorded video signal it is provided with a pulse generator for generating a timing signal within the vertical or horizontal retrace interval and a bell-shape filter having a Q for filtering the color signal with an adjustable Q by the timing signal, the Q of the bell-shape filter being lowered within the vertical or horizontal retrace interval.

5. A VCR including a signal processing circuit as claimed in any preceding claim.

## Patentansprüche

1. Videosignal-Verarbeitungsschaltung, **dadurch gekennzeichnet, dass** sie eine Aufzeichnungseinrichtung aufweist zum Aufzeichnen eines Videosignals auf ein Aufzeichnungsmedium, umfassend ein unterdrücktes oder entferntes Farbsignal in der vertikalen oder horizontalen Rücklaufperiode eines Farbsignal-Aufzeichnungsverarbeitungssystems;

   einen Pulssignalerzeuger (116, 136) zum Erzeugen eines Zeitsignals (f) in der vertikalen oder horizontalen Rücklaufperiode, wenn das aufgezeichnete Videosignal wiedergegeben wird; und
   einen Filter (115, 135) zum Filtern des wiedergegebenen Farbsignals mit einem vom Zeitsignal (f) anpassbaren Q, wobei das Q des Filters in der vertikalen oder horizontalen Rücklaufperiode vermindert ist.

2. Videosignal-Verarbeitungsschaltung nach Anspruch 1, **dadurch gekennzeichnet, dass** das Videosignal ein SECAM-Signal ist und der Filter mit dem anpassbaren Q ein Glockenkurvenfilter ist.

3. Videosignal-Verarbeitungsschaltung nach Anspruch 1, **dadurch gekennzeichnet, dass** die Einrichtung zum Entfernen des Farbsignals in der vertikalen oder horizontalen Periode bei der Verarbeitung der Farbsignalaufzeichnung in der Gate-Schaltung enthalten ist.

4. Videosignal-Verarbeitungsschaltung, **dadurch gekennzeichnet, dass** für das Aufzeichnen des Videosignals auf ein Aufzeichnungsmedium ein Pulssignalerzeuger vorgesehen ist, der ein Zeitsignal in der vertikalen oder horizontalen Rücklaufperiode des SECAM-Farbsignal-Aufzeichnungsverarbeitungssystems erzeugt, und ein inverser Glockenkurvenfilter mit einem vom Zeitsignal anpassbaren Q;

dass das Q des inversen Glockenkurvenfilters nur in der vertikalen oder horizontalen Rücklaufperiode vermindert ist und
dass zur Wiedergabe des aufgezeichneten Videosignals ein Pulserzeuger vorhanden ist zur Erzeugung eines Zeitsignals in der vertikalen oder horizontalen Rücklaufperiode sowie ein Glockenkurvenfilter mit einem Q zum Filtern des Farbsignals mit einem vom Zeitsignal anpassbaren Q, wobei das Q des Glockenkurvenfilters in der vertikalen oder horizontalen Rücklaufperiode vermindert ist.

5. VCR, umfassend eine Signalverarbeitungsschaltung nach irgendeinem vorhergehenden Anspruch.


**Revendications**

1. Un circuit de traitement de signal vidéo, **caractérisé en ce qu'**il comprend :

des moyens d'enregistrement pour enregistrer, sur un support d'enregistrement, un signal vidéo comprenant un signal couleur qui est supprimé ou éliminé à l'intérieur d'un intervalle de retour de faisceau, vertical ou horizontal, d'un système de traitement d'enregistrement du signal couleur;
un générateur de signal impulsionnel (116, 136) pour produire un signal de synchronisation (f) dans l'intervalle de retour de faisceau vertical ou horizontal lorsque ledit signal vidéo enregistré est reproduit ; et
un filtre (115, 135) pour filtrer le signal couleur reproduit et présentant un Q réglable par le signal de synchronisation (f), le Q du filtre étant abaissé à l'intérieur de l'intervalle de retour de faisceau vertical ou horizontal.

2. Un circuit de traitement de signal vidéo tel que revendiqué à la revendication 1, **caractérisé en ce que** le signal vidéo est un signal SECAM et le filtre à Q réglable est un filtre en cloche.

3. Un circuit de traitement de signal vidéo tel que revendiqué à la revendication 1, **caractérisé en ce que** le moyen pour éliminer le signal couleur à l'intérieur de l'intervalle vertical ou horizontal qui est utilisé pour le traitement d'enregistrement du signal couleur comprend un circuit porte.

4. Un circuit de traitement de signal vidéo, **caractérisé en ce que**, pour l'enregistrement du signal vidéo sur un support d'enregistrement, on prévoit un générateur de signal impulsionnel pour produire un signal de synchronisation à l'intérieur de l'intervalle de retour de faisceau vertical ou horizontal d'un système SECAM de traitement d'enregistrement du signal couleur et un filtre en cloche inverse présentant un Q qui est réglable par le signal de synchronisation ;

le Q du filtre en cloche inverse est abaissé uniquement à l'intérieur de l'intervalle de retour de faisceau vertical ou horizontal ; et
pour la reproduction du signal vidéo enregistré, on prévoit un générateur d'impulsion pour produire un signal de synchronisation à l'intérieur de l'intervalle de retour de faisceau vertical ou horizontal et un filtre en cloche présentant un Q pour filtrer le signal couleur avec un Q réglable par le signal de synchronisation, le Q du filtre en cloche étant abaissé à l'intérieur de l'intervalle de retour de faisceau vertical ou horizontal.

5. Un magnétoscope à cassette comprenant un circuit de traitement de signal comme revendiqué dans une quelconque revendication précédente.

# FIG.1

EP 0 901 292 B1

# FIG. 2(1)

# FIG. 2(2)

FIG.3(a)

FIG.3(b)

FIG.3(c)

FIG.3(d)

FIG.3(e)

FIG.3(f)

FIG.3(g)

FIG.4

FIG.5

EP 0 901 292 B1

FIG.6(a)

FIG.6(b)

FIG.6(c)  MAX    A

MIN    B

FIG.6(d)

TO RECORDER $\circ \overset{c}{\leftarrow}$ | Y/C ADDER | $\overset{b}{\leftarrow}$ | GATE CIRCUIT | $\leftarrow$ | INVERSE BELL-SHAPE FILTER | $\overset{a}{\leftarrow}\circ$

—113 —112 —111

FIG.10(a)

$\circ \overset{c}{\rightarrow}$ | Y/C SEPARATOR | $\overset{d}{\rightarrow}$ | BELL-SHAPE FILTER | $\overset{e}{\rightarrow}\circ$ TO REPRODUCER

—114 —115

| PULSE SIGNAL GENERATOR | $\overset{f}{\uparrow}$

—116

FIG.10(b)

14

BELL-SHAPE FILTER `3` → LIMITER `4` → ¼ TIMES FREQUENCY DIVIDER `5` → GAIN CONTROL CIRCUIT `11`

ENVELOPE DETECTOR `7`

FIG.7

INPUT → 4.3 MHZ BPF `2` → BELL-SHAPE FILTER `3` → LIMITER `4` → ¼ TIMES FREQUENCY DIVIDER `5` → 1.1 MHZ BPF `6` → INVERSE BELL-SHAPE FILTER `7` → OUTPUT `8`

FIG.8

FIG.9(a)

FIG.9(b)

FIG.9(c)

FIG.9(d)

FIG.9(e)

FIG.9(f)

FIG.11(a)

FIG.11(b)
FIG.11(d)

SUPPRESSION PERIOD

FIG.11(e)

FIG.11(f)

LOWER Q

EP 0 901 292 B1

FIG.12(a)

FIG.12(b)

FIG.13(a)

FIG.13(c)

FIG.13(e)

FIG.13(b)

LOWER Q

FIG.13(g)

FIG.13(f)

LOWER Q

EP 0 901 292 B1

FIG.14

FIG.15(a)

FIG.15(b)

FIG.16(a)

RETRACE PERIOD

FIG.16(b)

FIG.16(e)

FIG.16(f)

EP 0 901 292 B1

FIG.17(a)

FIG.17(b)

FIG.18(a)

FIG.18(b)
FIG.18(e')

SUPPRESSION PERIOD

FIG.18(f')

UNDESIRED
SIGNAL